(19) Europäisches Patentamt
European Patent Office
Office européen des brevets

(11) Veröffentlichungsnummer: **0 471 966 A2**

(12) # EUROPÄISCHE PATENTANMELDUNG

(21) Anmeldenummer: **91111296.9**

(51) Int. Cl.5: **C08G 65/32**, C08G 18/50

(22) Anmeldetag: **06.07.91**

(30) Priorität: **19.07.90 DE 4022931**

(43) Veröffentlichungstag der Anmeldung:
**26.02.92 Patentblatt 92/09**

(84) Benannte Vertragsstaaten:
**CH DE FR GB IT LI**

(71) Anmelder: **BAYER AG**

**W-5090 Leverkusen 1 Bayerwerk(DE)**

(72) Erfinder: **Thiery, Urs, Dr.**
**Goethestrasse 71**
**W-4047 Dormagen(DE)**

(54) **Verfahren zur Herstellung von Aminophenoxygruppen aufweisenden Polyethern, die nach diesem Verfahren erhaltenen Verbindungen und ihre Verwendung als Reaktionspartner für organische Polyisocyanate.**

(57) Ein Verfahren zur Herstellung von endständig eingebaute Aminophenoxy-Einheiten und wiederkehrende Struktureinheiten der Formel

$-CH_2-CH_2-CH_2-CH_2-O-$

aufweisenden Polyethern durch Umsetzung von derartige Struktureinheiten aufweisenden Polyetherdiolen des Molekulargewichtsbereichs 400 bis 6000 mit Verbindungen der Formel

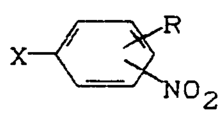

(R = Wasserstoff oder Methyl, X = Fluor, Chlor, Methoxygruppe oder Ethoxy) in Gegenwart von alkalisch reagierenden Verbindungen und anschließende Hydrierung des so erhaltenen Zwischenprodukts, wobei man entweder Polyetherdiole der genannten Art, die zusätzlich Ethylenoxideinheiten eingebaut enthalten, oder Gemische von Polyetherdiolen der genannten Art mit anderen, Ethylenoxideinheiten aufweisenden Polyetherpolyolen einsetzt, mit der Maßgabe, daß der Anteil der letztgenannten Polyetherpolyole maximal 30 Gew.-% beträgt, die so erhaltenen Polyether und ihre Verwendung als Reaktionspartner für organische Polyisocyanate bei der Herstellung von Harnstoffgruppen aufweisenden Kunststoffen nach dem Isocyanat-Polyadditionsverfahren.

EP 0 471 966 A2

Die Erfindung betrifft ein neues Verfahren zur Herstellung von endständig eingebaute Aminophenoxygruppierungen aufweisenden Polyethern, die nach diesem Verfahren erhaltenen Polyether und ihre Verwendung als Reaktionspartner für organische Polyisocyanate bei der Herstellung von Harnstoffgruppen aufweisenden Kunststoffen nach dem Isocyanat-Polyadditionsverfahren.

Endständig eingebaute Aminophenoxygruppierungen aufweisende Polyether stellen wertvolle Ausgangsmaterialien zur Herstellung von Kunststoffen nach dem Isocyanat-Polyadditionsverfahren dar. Die Herstellung derartiger Verbindungen ist beispielsweise in EP-A-0 268 849, EP-A-0 288 825 oder EP-A-0 335 274 beschrieben.

Das Prinzip der Herstellungsverfahren dieser Vorveröffentlichungen besteht darin, daß man endständige Hydroxylgruppen aufweisende Polyether, d.h. die aus der Polyurethanchemie bekannten Polyetherpolyole mit Halogen- oder Alkoxy-substituierten Nitrobenzolen in Gegenwart von alkalisch reagierenden Verbindungen zu den entsprechenden Nitrophenoxy-Substituenten aufweisenden Polyethern umsetzt, worauf sich die Hydrierung der Nitrogruppe zu Aminogruppen anschließt.

Wie eigene Versuche des Anmelders zeigen, lassen sich Polyetherdiole, die durch Polymerisation von Tetrahydrofuran hergestellt worden sind nach diesem Prinzip nur schlecht oder nur unter Verwendung von polaren aprotischen Lösungsmitteln wie z.B. Dimethylsulfoxid, N-Methylpyrrolidon oder Dimethylformamid zu den entsprechenden nitrophenylterminierten Verbindungen umsetzen. Wünschenswert wäre jedoch ein möglicher Ersatz dieser Lösungsmittel durch physiologisch unbedenklichere und preisgünstigere Lösungsmittel wie beispielsweise Toluol oder Xylol oder insbesondere ein völliger Verzicht auf inerte Lösungsmittel.

Wie jetzt überraschend gefunden wurde, gelingt es, dieses Ziel dadurch zu erreichen, daß man als Reaktionspartner für die genannten Nitrobenzole mit gegenüber Hydroxylgruppen reaktionsfähigen Gruppen neben der hydroxyterminierten Polyetherkomponente, die die wiederkehrenden Struktureinheiten der Formel

$-CH_2-CH_2-CH_2-CH_2-O-$

aufweist, zu einem bestimmten Anteil Polyether mit der wiederkehrenden Struktureinheit

$-CH_2-CH_2-O-$

einsetzt. Ebenso lassen sich hydroxyterminierte Polyether, die die wiederkehrende Struktureinheit der Formel

$-CH_2-CH_2-CH_2-CH_2-O-$

und zusätzlich im Block zu einem bestimmten Anteil die wiederkehrende Struktureinheit

$-CH_2-CH_2-O-$

aufweisen, umsetzen.

Gegenstand der Erfindung ist ein Verfahren zur Herstellung von endständig eingebaute Aminophenoxy-Einheiten und wiederkehrende Struktureinheiten der Formel

$-CH_2-CH_2-CH_2-CH_2-O-$

aufweisenden Polyethern durch Umsetzung

a) einer Polyether-Komponente, bestehend im wesentlichen aus einem, wiederkehrende Struktureinheiten der Formel

$-CH_2-CH_2-CH_2-CH_2-O-$

aufweisenden, Polyetherdiol des Molekulargewichtsbereichs 400 bis 6000 mit

b) Verbindungen der Formel

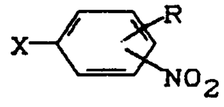

wobei

R für Wasserstoff oder eine Methylgruppe und

X für Fluor, Chlor, eine Methoxygruppe oder eine Ethoxygruppe stehen,

in Gegenwart von alkalisch reagierenden Verbindungen und anschließende Hydrierung der in den so erhaltenen Zwischenprodukten vorliegenden Nitrogruppen zu Aminogruppen, dadurch gekennzeichnet, daß man als Komponente a) eine solche verwendet, die mindestens 2 Gew.-% an innerhalb von Polyetherketten eingebauten Ethylenoxideinheiten aufweist, wobei diese Ethylenoxideinheiten Teil der genannten Polyetherdiole sind und/oder durch Abmischung von anderen, Ethylenoxideinheiten aufweisenden Polyetherpolyolen des Molekulargewichtsbereichs 200 bis 6000 mit diesen Polyetherdiolen in die Komponente a) eingeführt worden sind, mit der Maßgabe, daß der Anteil der letztgenannten Polyetherpolyole maximal 30 Gew.-%, bezogen auf das Gesamtgewicht der Komponente a) ausmacht.

Gegenstand der Erfindung sind auch die nach diesem Verfahren erhaltenen, endständig eingebaute Struktureinheiten der Formel

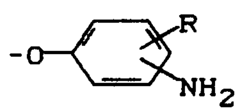

und wiederkehrende Struktureinheiten der Formel

$-CH_2-CH_2-CH_2-CH_2-O-$

aufweisenden Polyether.

Gegenstand der Erfindung ist schließlich auch die Verwendung der erfindungsgemäßen Verfahrensprodukte als Reaktionspartner für organische Polyisocyanate bei der Herstellung von Harnstoffgruppen aufweisenden Kunststoffen nach dem Isocyanat-Polyadditionsverfahren.

Ausgangsmaterialien für das erfindungsgemäße Verfahren sind a) eine Polyether-Komponente und b) gegebenenfalls methylsubstituierte Nitrobenzole mit gegenüber Hydroxylgruppen reaktionsfähigen Substituenten.

Die Polyetherkomponente a) besteht im wesentlichen aus Struktureinheiten der Formel

$-CH_2-CH_2-CH_2-CH_2-O-$

aufweisenden Polyetherdiolen eines aus dem Hydroxylgruppengehalt berechenbaren Molekulargewichts von 400 bis 6000, vorzugsweise 700 bis 4000.

Die Herstellung derartiger Polyetherdiole geschieht in an sich bekannter Weise durch Polymerisation von Tetrahydrofuran mit sich selbst in Gegenwart von geeigneten Katalysatoren wie Trifluormethansulfonsäure, Trifluormethansulfonsäureanhydrid, Fluorsulfonsäure oder Oleum und gegebenenfalls anschließender Umsetzung der reinen Polytetramethylenoxidether mit KOH und der gewünschten Menge Ethylenoxid. Ebenso kann THF mit Hilfe der beispielhaft genannten Katalysatoren auf vorgelegtes Polyethylenglykol aufgepfropft werden.

Es ist jedenfalls erfindungswesentlich, daß in der Polyetherkomponente a) mindestens 2 Gew.-%, vorzugsweise 3 bis 30 Gew.-% und besonders bevorzugt 5 bis 20 Gew.-%, bezogen auf das Gesamtgewicht der Komponente a), an innerhalb von Polyetherketten eingebauten Ethylenoxideinheiten der Formel

$-CH_2-CH_2-O-$

vorliegen. Diese Ethylenoxideinheiten können sowohl in den genannten Polyetherdiolen chemisch eingebaut vorliegen oder auch in Form einer mit den Polyetherdiolen abzumischenden zweiten Polyetherkomponente in die Ausgangskomponente a) eingeführt worden sein.

Als gegebenenfalls mitzuverwendende Abmischkomponente kommen beliebige Polyetherpolyole in Betracht, die ein aus Hydroxylgruppengehalt und Hydroxylfunktionalität berechenbares Molekulargewicht von 200 bis 6000, vorzugsweise 400 bis 4000 und insbesondere 400 bis 2000 und eine Hydroxylfunktionalität von 2 bis 4, vorzugsweise von 2 aufweisen. Derartige Polyetherpolyole werden in an sich bekannter Weise durch Alkoxylierung von geeigneten Startermolekülen wie beispielsweise Wasser, Ethylenglykol, Propylenglykol, Glycerin, Trimethylolpropan, Pentaerythrit oder Gemischen derartiger Startermoleküle erhalten, wobei bei der Alkoxylierungsreaktion Ethylenoxid oder auch Gemische von Ethylenoxid mit anderen Alkylenoxiden wie Propylenoxid oder Butylenoxiden oder auch Tetrahydrofuran verwendet werden. Diese als Abmischkomponente gegebenenfalls mitverwendeten Polyetherpolyole weisen einen Ethylenoxid-Gehalt von mindestens 10 Gew.-% auf. Die Verbindungen werden in Mengen von maximal 50, vorzugsweise von maximal 30 Gew.-%, bezogen auf das Gesamtgewicht der Komponente a) mitverwendet.

Erfindungsgemäß besonders bevorzugt ist die Verwendung einer Ausgangskomponente a) die, den gemachten Ausführungen entsprechend, entweder aus Polyetherdiolen der Formel

$$HO\text{-}(\text{-}CH_2\text{-}CH_2\text{-}O\text{-})_p\text{-}(\text{-}CH_2\text{-}CH_2\text{-}CH_2\text{-}CH_2\text{-}O\text{-})_q\text{-}(\text{-}CH_2\text{-}CH_2\text{-}O\text{-})_r\text{-}H$$

oder aus Abmischungen derartiger Polyetherdiole mit Polyethylenglykolen des Molekulargewichtsbereichs 400 bis 2000 bestehen, wobei in der zuletztgenannten Formel

q für eine ganze oder (im statistischen Mittel) gebrochene Zahl von 6 bis 83 und

p und r für gleiche oder verschiedene ganze oder (im statistischen Mittel) gebrochene Zahlen von 0,2 bis 40 stehen.

Zu den erfindungsgemäß in Betracht kommenden Ausgangsmaterialien b) gehören gegebenenfalls methylsubstituierte Halogennitrobenzole, Methoxynitrobenzole oder Ethoxynitrobenzole der allgemeinen Formel

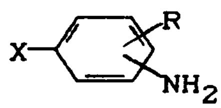

für welche

R für Wasserstoff oder eine Methylgruppe, vorzugsweise für Wasserstoff steht,

X für Fluor, Chlor, Methoxy oder Ethoxy, vorzugsweise für Chlor oder Methoxy steht,

und in welcher die Halogen- oder Alkoxy- und Nitrosubstituenten vorzugsweise ortho- oder paraständig zueinander angeordnet sind. In Betracht kommen beispielsweise 2-Nitrochlorbenzol, 2-Nitrofluorbenzol, 4-Nitrochlorbenzol, 4-Nitrofluorbenzol, 1-Methyl-2-nitro-3-chlorbenzol, 1-Methyl-2-nitro-3-fluorbenzol, 1-Methyl-4-nitro-5-chlorbenzol, 1-Methyl-4-nitro-5-fluorbenzol, 1-Methyl-2-nitro-6-chlorbenzol, 1-Methyl-2-nitro-6-fluorbenzol, 2-Methoxynitrobenzol, 4-Methoxynitrobenzol, 2-Ethoxynitrobenzol, 4-Ethoxynitrobenzol, 1-Methoxy-3-methyl-2-nitrobenzol, 1-Methoxy-3-methyl-4-nitrobenzol, 1-Ethoxy-3-methyl-2-nitrobenzol oder 1-Ethoxy-3-methyl-4-nitrobenzol. Besonders bevorzugte Ausgangsmaterialien (ii) sind 2-Nitrochlorbenzol, 4-Nitrochlorbenzol, 2-Nitroanisol oder 4-Nitroanisol.

Als alkalisch reagierende Verbindung, die zur Umsetzung der Polyhydroxylverbindungen (i) mit den Halogennitrobenzolen oder Alkoxynitrobenzolen (ii) erforderlich sind, kommen beispielsweise Metallhydride, Metallalkoxide und bevorzugt Metallhydroxide in Frage. Besonders bevorzugt werden Natriumhydroxid und Kaliumhydroxid.

Bei der Durchführung der ersten Stufe des erfindungsgemäßen Verfahrens werden die Ausgangsmaterialien a) bezogen auf die Komponente b) im Unterschuß, äquivalenten Mengen oder im Überschuß eingesetzt. Im allgemeinen liegt das Äquivalentverhältnis von Hydroxylgruppen der Komponente a) zu Halogen- bzw. Alkoxygruppen der Komponente b) bei 1:0,1 bis 1:3, vorzugsweise 1:0,3 bis 1:1,5.

Der bei der Reaktion freiwerdende Halogenwasserstoff kann, wie schon erwähnt, durch Zusatz von alkalisch reagierenden Verbindungen gebunden werden. Dabei wird deren Menge zumindest so bemessen, daß sie zur Neutralisation des abgespaltenen Halogenwasserstoffs ausreicht. Bevorzugt werden sie in solch einer Menge verwendet, daß 1 bis 3 Mol Basenäquivalente pro Mol Komponente b) zur Verfügung stehen. Bei der Verwendung der Alkoxynitrobenzole b) reichen gegebenenfalls geringere Basenmengen von 0,1 bis 1,0 Mol Basenäquivalente pro Mol Komponente b) aus.

Die erste Stufe des erfindungsgemäßen Verfahrens wird in Substanz oder gegebenenfalls mit einem organischen Lösungsmittel durchgeführt. Dabei können die Reaktionspartner in homogener Phase oder zweiphasig, gelöst, emulgiert oder suspendiert vorliegen.

Geeignete organische Lösungsmittel sind beispielsweise: Benzol, Toluol oder Xylol.

Selbstverständlich können auch beliebige Gemische derartiger Lösungsmittel eingesetzt werden.

Die Menge des gegebenenfalls eingesetzten Lösungsmittels wird hierbei im allgemeinen so bemessen, daß sie ausreicht, um das Ausgangsmaterial b) klar zu lösen. In der Praxis bedeutet dies, daß die Lösungsmittel im allgemeinen in einer Menge von 50 bis 1000, bevorzugt 100 bis 500 Gew.-Teilen

Lösungsmittel pro 100 Gew.-Teilen der Komponente b) zum Einsatz gelangen.

Die erste Stufe des erfindungsgemäßen Verfahrens wird im allgemeinen bei 10 bis 100 °C, bevorzugt bei 20 bis 80 °C, vorzugsweise unter Normaldruck, gegebenenfalls jedoch auch unter Unter- oder Überdruck kontinuierlich oder diskontinuierlich durchgeführt.

Die Verweilzeit beträgt im allgemeinen 0,5 bis 36 Stunden; bevorzugt werden 0,5 bis 18 Stunden.

Zur Durchführung der ersten Stufe des erfindungsgemäßen Verfahrens kann man beispielsweise so vorgehen, daß man die Ausgangskomponente a) und die Base vorlegt, entwässert und die Komponente b), d.h. das Nitrophenylierungsmittel in geschmolzener oder gegebenenfalls in gelöster oder suspendierter Form unter Rühren, gegebenenfalls unter Kühlung kontinuierlich zugibt. Anschließend rührt man bei Raumtemperatur oder gegebenenfalls erhöhter Temperatur von beispielsweise bis zu 100 °C, vorzugsweise bis zu 80 °C so lange nach, bis dünnschichtchromatographisch oder gaschromatographisch vollständiger Umsatz des Nitrophenylierungsmittels b) angezeigt wird.

Die Aufarbeitung der Nitrophenoxyaddukte erfolgt in an sich bekannter Weise. Zweckmäßig setzt man dem Reaktionsgemisch etwa 5 bis 30 Gew.-% Wasser zu, stellt mit Säure, bevorzugt $H_2SO_4$ oder HCl, neutral und destilliert das Wasser wieder ab. Das ausfallende Salz wird abfiltriert. Das so erhaltene Rohprodukt kann im allgemeinen ohne weitere Reinigung weiterverarbeitet werden. In besonderen Fällen kann eine Reinigung am Dünnschichtverdampfer vorteilhaft sein.

Grundsätzlich denkbar, jedoch weniger bevorzugt, wäre auch eine Arbeitsweise, die darin besteht, das in der ersten Stufe anfallende Reaktionsgemisch, gegebenenfalls nach Neutralisation des überschüssigen Alkalihydroxids ohne Zwischenisolierung direkt der zweiten Stufe zuzuführen.

Die in der ersten Stufe des erfindungsgemäßen Verfahrens erhaltenen endständige Nitrophenoxygruppen aufweisenden Verbindungen werden in der zweiten Stufe in an sich bekannter Weise durch Reduktion mit nascierendem oder katalytischem, beispielsweise mittels Raney-Nickel oder Palladium auf Kohle angeregtem Wasserstoff in die entsprechenden Polyamine überführt. Die Hydrierung kann in Gegenwart oder Abwesenheit von inerten Lösungsmitteln bei 20 bis 120 °C und einem Druck von 20 bis 80 bar erfolgen. Geeignete Lösungsmittel sind beispielsweise Methanol, Ethanol, i-Propynol oder Toluol. Bevorzugt wird Methanol, Isopropanol oder Toluol. Die Amine werden als Destillationsrückstand bei der destillativen Entfernung des Lösungsmittels gewonnen und können gegebenenfalls ohne weitere Reinigungsschritte der erfindungsgemäßen Verwendung zugeführt werden.

Die nach Aufarbeitung erhaltenen erfindungsgemäßen Polyamine stellen im allgemeinen helle bis dunkel-bräunlich gefärbte Produkte dar. Entsprechend den obengemachten Ausführungen handelt es sich bei den erfindungsgemäßen Verfahrensprodukten um Polyether oder Polyethergemische mit endständig angeordneten Struktureinheiten der Formel

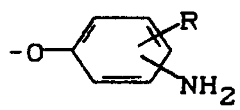

,

wobei

R für Wasserstoff oder eine Methylgruppe steht und wobei die Aminogruppe und das Sauerstoffatom vorzugsweise ortho- oder para-ständig zueinander angeordnet sind.

Entsprechend den obengemachten Ausführungen bezüglich des Äquivalentverhältnisses der Komponenten a) und b) können in den erfindungsgemäßen Verfahrensprodukten neben diesen Aminophenoxygruppen auch noch freie Hydroxylgruppen vorliegen, wobei, den obengemachten Ausführungen weitgehend entsprechend, die gegenüber Isocyanatgruppen reaktionsfähigen Gruppen der erfindungsgemäßen Verfahrensprodukte zu 10 bis 100 %, vorzugsweise zu 30 bis 95 % aus erfindungsgemäß eingeführten Aminogruppen und zum Rest aus Hydroxylgruppen bestehen. Die mittlere Funktionalität der erfindungsgemäßen Verfahrensprodukte im Sinne der Isocyanat-Polyadditionsreaktion liegt unter Berücksichtigung der gegebenenfalls möglichen Mitverwendung von höherfunktionellen, Ethylenoxideinheiten aufweisenden Polyetherpolyolen im allgemeinen bei 2 bis 3, vorzugsweise bei 2.

Die erfindungsgemäßen Verfahrensprodukte eignen sich als Reaktionspartner für gegebenenfalls blokkierte Polyisocyanate bei der Herstellung von Harnstoffgruppen aufweisenden Kunststoffen, d.h. von gegebenenfalls zellförmigen und gegebenenfalls Urethangruppen aufweisenden Polyharnstoffen, wobei die erfindungsgemäßen Verfahrensprodukte auch mit anderen nieder- oder höhermolekularen Verbindungen mit gegenüber Isocyanatgruppen reaktionsfähigen Gruppen kombiniert werden können. Geeignete derartige Ausgangskomponenten werden beispielsweise in DE-A-2 302 564, DE-A-2 432 764 (US-PS 3 903 679)

sowie in den DE-A-2 639 083, 2 512 385, 2 513 815, 2 550 796, 2 550 797, 2 550 833, 2 550 860 und 2 550 063 genannt. Dort finden sich auch Hinweise auf bei der Polyurethanherstellung gegebenenfalls mitzuverwendenden Hilfs- und Zusatzstoffe.

Besonders geeignet sind die erfindungsgemäßen Polyamine für eine Anwendung in Kombination mit festen Polyisocyanaten. Gemäß DE-A 3 230 757 können mit diesen Komponenten bei Raumtemperatur oder gegebenenfalls erhöhter Temperatur beliebig lang lagerfähige Reaktionssysteme hergestellt werden, die erst bei stärkerer Hitzeeinwirkung aushärten. Derartige Systeme werden allgemein als Einkomponentensysteme bezeichnet. Geeignete feste Polyisocyanate sind beispielsweise dimeres 2,4-Diisocyanatotoluol (TT) oder 3,3'-Dimethyl-4,4'-diisocyanatodiphenylharnstoff (TDIH).

Die unter erfindungsgemäßer Verwendung der erfindungsgemäßen Verfahrensprodukte hergestellten, Harnstoffgruppen aufweisenden Kunststoffe eignen sich für alle beliebigen Einsatzgebiete, die bislang für Polyurethankunststoffe bekannt geworden sind.

In den nachfolgenden Beispielen beziehen sich alle Prozentangaben, soweit nichts anders lautendes vermerkt, auf das Gewicht.

Beispiel 1

a) Nitrophenylierung

900 g (0,45 Mol) eines Poly-THF-etherdiols der OH-Zahl 56 wurden mit 100 g (0,07 Mol) eines Polyethylenoxidetherdiols der OH-Zahl 80 versetzt und bei 65 °C aufgeschmolzen. Zur Schmelze wurden 174,7 g (1,56 Mol) 50 %ige Kalilauge gegeben, bei 50 °C/1 mbar 15 Minuten entgast und anschließend bei 120 °C/1 mbar 74 g $H_2O$ abdestilliert.

Die Mischung wurde auf 37 °C abgekühlt und innerhalb von 45 Minuten mit 115 g (0,73 Mol) 4-Chlornitrobenzol, gelöst in 200 ml Toluol, versetzt, so daß die Temperatur der Mischung nicht über 40 °C stieg.

Es wurde 4 h bei 40 °C/5 mbar nachgerührt, bis dünnschichtchromatographisch kein p-Chlornitrobenzol mehr nachweisbar war.

Die Mischung wurde mit 5 g Wasser versetzt und mit 60 ml konzentrierter Salzsäure neutral gestellt. Bei 110 °C/1 mbar wurde das Wasser abdestilliert und das Salz bei 80 °C/2 bar über eine Drucknutsche abfiltriert.

| | |
|---|---|
| OH-Zahl: | 14 |
| Viskosität: | bei RT fest (gelbes Wachs) |

b) Hydrierung

526 g nitrophenylierter Polyether nach Beispiel 1a) wurden in 526 ml Methanol gelöst und mit 21 g Raney-Nickel versetzt. Diese Mischung wurde in einem Druckkessel bei einem Wasserstoffdruck von 60 bar, zu Beginn der Reaktion und einer Temperatur von 70 °C hydriert, vom Katalysator abfiltriert und das Lösungsmittel destillativ entfernt. Dunkelbraunes Produkt

| | |
|---|---|
| Viskosität: | 900 mPa.s/50 °C |
| NHZ: | 37 |

Vergleichsbeispiel

Analog Beispiel 1a) wurden 1000 g (0,5 Mol) Poly-THF-etherdiol der OH-Zahl 56 ohne Polyethylenoxidetherdiol mit 110,3 g (0,7 Mol) 4-Chlornitrobenzol und 168 g (1,5 Mol) 50 %iger Kalilauge umgesetzt und ebenso aufgearbeitet.

Nach 4 h Nachrührzeit bei 40 °C/1 mbar wurde die Reaktion abgebrochen und der Gehalt an 4-Chlornitrobenzol auf 3,5 Gew.-% bestimmt. Zusätzlich sind mehr als 3 Gew.-% Nebenprodukte im Produkt enthalten.

| | |
|---|---|
| OH-Zahl: | 49 |
| Viskosität: | bei RT fest (dunkelbraunes Wachs) |

Beispiele 2 - 12

Entsprechend Beispiel 1 wurden unter Variation der Ausgangsmaterialien und der Reaktionsbedingungen weitere Beispiele 2 - 12 durchgeführt. Die Reaktionsbedingungen und die Ergebnisse sind in nachstehender Tabelle zusammengefaßt, wobei die Daten von Beispiel 1 der besseren Übersicht halber nochmals aufgeführt werden.

Tabelle

| Nitro-P. Beispiel | PW % | NPhR | Equiv. | KOH Equiv. | Reakt.Zeit | OHZ | Amino-P. Beispiel | NHZ | OHZ | Visk. mPas/50° C |
|---|---|---|---|---|---|---|---|---|---|---|
| 1 a) | 10 | p-NCB | 0,70 | 1,5 | 4 h | 14 | 1 b) | 37 | 51 | 900 |
| 2 a) | 5 | p-NCB | 0,95 | 1,5 | 24 h | 6 | 2 b) | 46 | 52 | 800 |
| 3 a) | 10 | p-NCB | 0,95 | 1,5 | 24 h | 3 | 3 b) | 43 | 51 | 1.300 |
| 4 a) | 10 | p-NCB | 0,70 | 1,5 | 4 h | 14 | 4 b) | 37 | 48 | 910 |
| 5 a) | 3 | p-NCB | 0,70 | 1,5 | 13 h | 13 | 5 b) | 36 | 51 | 1.230 |
| 6 a) | 10 | p-NCB | 1,20 | 1,5 | 7 h | 0 | 6 b) | 46 | 50 | 1.050 |
| 7 a) | 5 | o-NCB | 0,70 | 1,2 | 21 h | 10 | 7 b) | 36 | 49 | 830 |
| 8 a) | 10 | o-NCB | 0,95 | 1,5 | 5 h 30' | 6 | 8 b) | 41 | 51 | 1.160 |
| 9 a) | 10 | p-NA | 0,70 | 0,5 | 3 h | 11 | 9 b) | 37 | 49 | 1.350 |
| 10 a) | 10 | p-NA | 0,95 | 0,5 | 6 h | 4 | 10 b) | 42 | 48 | 910 |
| 11 a) | 10 | o-NA | 0,95 | 0,5 | 6 h | 12 | 11 b) | 41 | 49 | 1.350 |
| 12 a) | 10 | p-NPE | 0,70 | 0,5 | 18 h | 16 | 12 b) | 34 | 50 | 1.500 |

Tabelle (Fortsetzung)

| | |
|---|---|
| Nitro-P.: | Nitrophenylterminierter Polytetramethylenoxidether |
| Amino-P.: | Aminophenylterminierter Polytetramethylenoxidether |
| NPhR: | Nitrophenylierungsreagenz |
| p-NCB: | p-Chlornitrobenzol |
| p-NA: | p-Nitroanisol |
| p-NPE: | p-Nitrophenetol |

Reaktionsbedingungen: rühren bei 40° C/5 mbar

Durchführung der Beispiele 2 a)/b) - 12 a)/b) analog Beispiel 1 a)/b)

| | |
|---|---|
| PW: | Polywachs (Polyethylenoxidetherdiol, OHZ = 80) |
| % = | Gew.-% der Polyethermischung |
| Equiv.: | Molequivalent, bezogen auf mol OH-Gruppen der Polyethermischung |
| OHZ: | durch Peracetylierung mit Essigsäureanhydrid bestimmte OH-Zahl |
| NHZ: | durch Titration mit Perchlorsäure bestimmte NH-Zahl |

## Patentansprüche

1. Verfahren zur Herstellung von endständig eingebaute Aminophenoxy-Einheiten und wiederkehrende Struktureinheiten der Formel

$-CH_2-CH_2-CH_2-CH_2-O-$

aufweisenden Polyethern durch Umsetzung

a) einer Polyether-Komponente, bestehend im wesentlichen aus einem, wiederkehrende Struktureinheiten der Formel

$-CH_2-CH_2-CH_2-CH_2-O-$

aufweisenden, Polyetherdiol des Molekulargewichtsbereichs 400 bis 6000 mit

b) Verbindungen der Formel

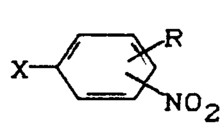

wobei

R für Wasserstoff oder eine Methylgruppe und

X für Fluor, Chlor, eine Methoxygruppe oder eine Ethoxygruppe stehen,

in Gegenwart von alkalisch reagierenden Verbindungen und anschließende Hydrierung der in den so erhaltenen Zwischenprodukten vorliegenden Nitrogruppen zu Aminogruppen, dadurch gekennzeichnet, daß man als Komponente a) eine solche verwendet, die mindestens 2 Gew.-% an innerhalb von Polyetherketten eingebauten Ethylenoxideinheiten aufweist, wobei diese Ethylenoxideinheiten Teil der genannten Polyetherdiole sind und/oder durch Abmischung von anderen, Ethylenoxideinheiten aufweisenden Polyetherpolyolen des Molekulargewichtsbereichs 200 bis 6000 mit diesen Polyetherdiolen in die Komponente a) eingeführt worden sind, mit der Maßgabe, daß der Anteil der letztgenannten Polyetherpolyole maximal 30 Gew.-%, bezogen auf das Gesamtgewicht der Komponente a) ausmacht.

**2.** Verfahren gemäß Anspruch 1, dadurch gekennzeichnet, daß die Komponente a) 5 bis 20 Gew.-% an innerhalb von Polyetherketten eingebauten Ethylenoxideinheiten aufweist.

**3.** Verfahren gemäß Anspruch 1 und 2, dadurch gekennzeichnet, daß man die Ethylenoxideinheiten ausschließlich durch Mitverwendung von Polyethylenglykolen des Molekulargewichtsbereichs 400 bis 2000 in die Komponente a) einführt.

**4.** Gemäß Anspruch 1 bis 3 erhaltene, endständig eingebaute Struktureinheiten der Formel

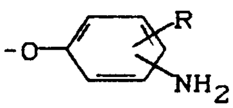

und wiederkehrende Struktureinheiten der Formel

$-CH_2-CH_2-CH_2-CH_2-O-$

aufweisende Polyether.

**5.** Verwendung der Polyether gemäß Anspruch 4 als Reaktionspartner für organische Polyisocyanate bei der Herstellung von Harnstoffgruppen aufweisenden Kunststoffen nach dem Isocyanat-Polyadditionsverfahren.